# EUROPEAN PATENT SPECIFICATION

(11) **EP 1 329 158 B1**
(45) Date of publication and mention of the grant of the patent: **17.11.2004**
(21) Application number: 03075208.3
(22) Date of filing: 21.01.2003
(51) Int. Cl.: A01K 97/10, A01K 97/00

(54) **An angling support assembly**
Halterung für Angelgerät
Support de canne à pêche

(30) Priority: 22.01.2002 GB 0201374
(43) Date of publication of application: 23.07.2003
(73) Proprietor: FOX INTERNATIONAL GROUP LIMITED, Hainault, Essex IG6 3UT (GB)
(72) Inventor: Fox, Clifford Royston, c/o Fox Int. Group Limited, Hainault, Essex IG6 3UT (GB)
(74) Representative: Crouch, David John

(56) References cited:
- DE-A- 19 707 904
- GB-A- 387 564
- GB-A- 1 587 761
- US-A- 4 443 963
- US-A- 4 581 840

## Description

The present invention relates to an angling support assembly for supporting an angling device which has an externally screw-threaded mounting spigot.

Previously proposed constructions of such an assembly have comprised a bar on which a number of such angling devices can be supported, with an internally screw-threaded portion being fixed into or on to the bar for each angling device.

A disadvantage of such a construction is that the angling device needs to be rotated relative to the bar until it is tightly fixed thereto. Unfortunately, however, the device might not have the correct orientation in relation to the bar when tightening occurs. Attempts have been made to overcome this problem by the insertion of a resilient member, such as an O-ring between the device and the bar, but these attempts have not been entirely satisfactory.

The present invention seeks to obviate this disadvantage.

Accordingly, the present invention is directed to an angling support assembly for supporting an angling device which has an externally screw-threaded mounting spigot, the assembly comprising a support member formed with a through-hole, and a connector having a head portion and an internally screw-threaded shank portion extending from the head portion, thereby enabling such a device to be secured to the support member by insertion of such a spigot in the said shank portion with the spigot and/or the shank portion extending through the through-hole and by rotation of the said head portion.
With such a construction, it is possible to hold the angling device which is being secured to the support member in the correct orientation thereto, whilst the connector is rotated until the angling device is tightly secured to the support member.

Advantageously, the support member is in the form of a bar.

In this case the bar may be formed with more than one transverse through-hole to support more than one angling device.

Alternatively or in addition, the support member may comprise a portion which itself can be secured to a bar, for example if the bar is tubular or otherwise hollow, by having a spigot portion which can be inserted into the end of the bar.

Either way, the support assembly may be provided with a number of through-holes for the connection of a corresponding number of angling devices to the assembly.

The or each connector may be provided with an end cap for its open end to enable it to be held in the support member with the shank portion extending through the through-hole.

A spacer may be provided for insertion between such an angling device and the support member. It would be conceivable for this spacer member to be provided between the head portion of the connector and the support member, but the former arrangement is preferred.

Preferably, the head portion is provided on its outer surface with a slot to facilitate rotation of the connector. Preferably, this slot is a coin slot that facilitates insertion of a coin for rotation of the connector, a coin perhaps being more readily available than, for example a screwdriver.

An example of an angling assembly embodying the present invention is illustrated in the accompanying drawings, in which:
- Figure 1: shows a part axial sectional elevational view of the assembly;

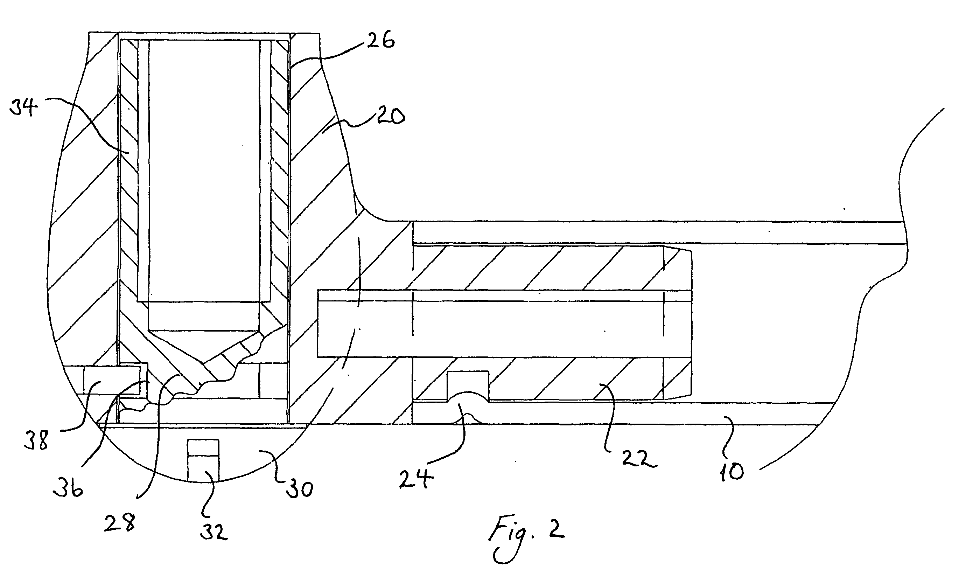

- Figure 2: shows an axial sectional view of part of the assembly shown in Figure 1 on an enlarged scale;

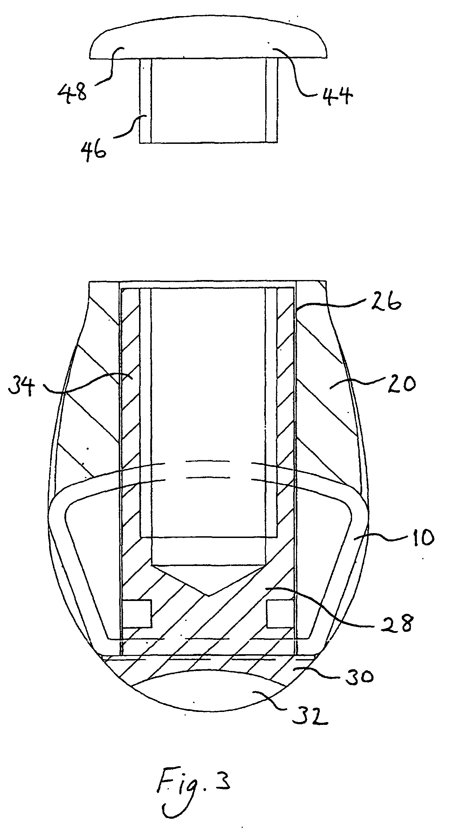

- Figure 3: shows an axial section of another part of the assembly shown in Figure 1 on an enlarged scale; and

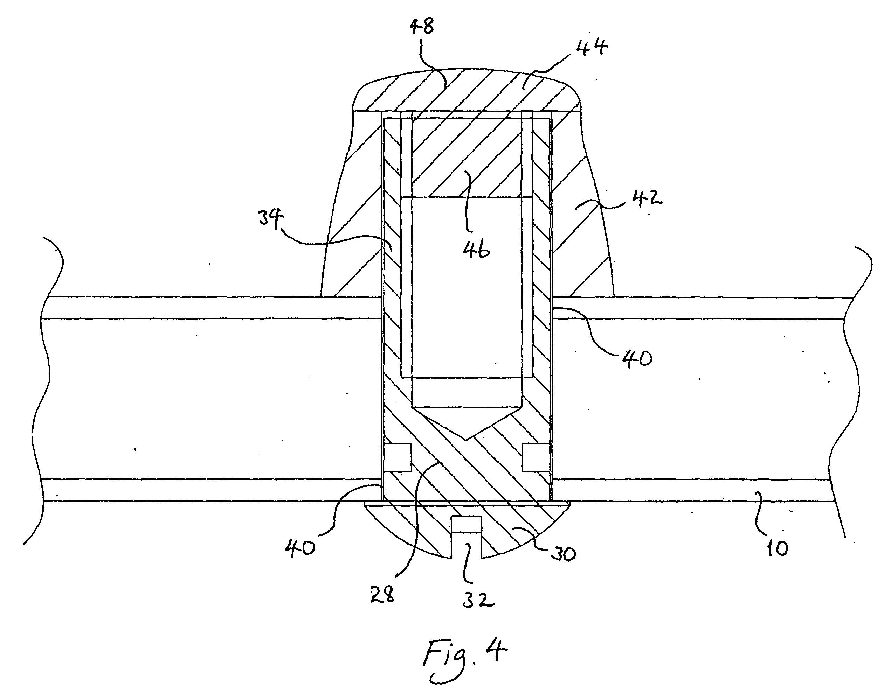

- Figure 4: shows a transverse sectional, part exploded view of the part shown in Figure 3.

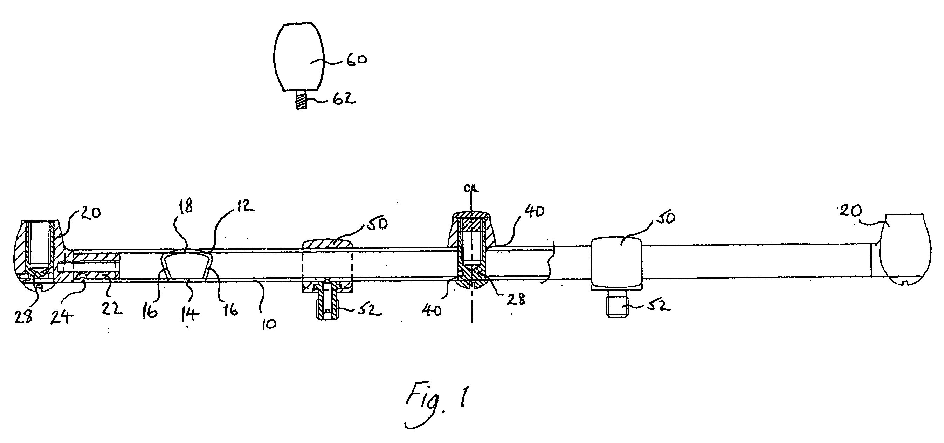

In the Figures, an aluminium alloy tubular bar 10 has a cross-section 12, illustrated diagrammatically in Figure 1, with a base portion 14, two side walls 16 diverging from one another upwardly away from the base portion 14, and a curved top wall portion 18 having an arcuate section so that it is concave as viewed from above. Both ends of the bar 10 are provided with an injection moulded synthetic plastics mounting block 20, which is provided with a spigot 22 inserted into the tubular bar 10. The latter is crimped at 24 to secure the spigot 22, and with it the block 20, in position.

The mounting block 20 is formed with a through-hole 26 extending in a generally upright direction. A stainless steel connector 28 extends through this through-hole 26. The connector 28 comprises a head portion 30, on the outside surface of which is formed a coin slot 32. The connector 28 also comprises an internally screw-threaded cylindrical hollow shank portion 34 which extends upwardly from the head portion 30 through the through-hole 26. A part of the shank portion 34 adjacent to the head portion 30 is provided with an annular groove 36, into which extends a retaining member 38 which inhibits the connector 28 from falling out of the through-hole 26 whilst at the same time enabling rotation of the connector 28 relative to the mounting block 20 within the through-hole 26 thereof.

The bar 10 is itself formed with a through-hole 40 through which extends the shank portion 34 of a further connector 28 having a head portion 30 upwardly from which extends the shank portion 34 through the through-hole 30.
The head portion 30 of this connector 28 is also provided with a coin slot 32. The connector 28 here is surrounded by an injection moulded synthetic plastics spacing sleeve 42 which surrounds the shank portion 34 where it extends from the bar 10 on the other side thereto relative to the head portion 30. An end cap 44 has a spigot portion 46 which snaps into the interior of the connector 28 at the open end thereof, a head 48 of the cap 44 abutting against the outer end of the spacer sleeve 42 to hold the connector 28 in place in the hole 40 of the bar 10.

Two clamps 50, on opposite sides respectively of the through-hole 40, are secured to the bar 10 and have downwardly extending externally screw-threaded spigot portions 52 to enable the whole bar to be secured to respective banksticks or respective portions of a rod support pod.

When in use, an angling device 60 having a downwardly projecting externally screw-threaded spigot portion 62 (of the same pitch and dimensions as the externally screw-threaded spigots 52 of the clamps 50) is brought to one of the connectors 28. The spigot 62 is inserted into the open end of the shank portion 34 of the connector 28 (if necessary after removal of any end cap 44). A coin is then used to rotate the connector 28 within its associated through-hole so that the spigot 62 is drawn into the external screw-threaded shank portion 34 whilst the angling device 60 is held in its correct orientation relative to the bar 10. Rotation of the connector 28 in this way is continued until the device 60 is tightly secured to the bar 10.

The angling device 60 may comprise an electronic bite detector, or a rod holder, for example.

Numerous variations and modifications to the illustrated assembly may occur to the reader without taking the resulting construction outside the scope of the invention. For example, further end caps like the one labelled 44 in Figure 1 may be inserted into the upper ends of the connector 28 at the ends of the bar 10. The spacer 42 could conceivably be positioned between the head portion 30 of the connector 28 and the bar 10 instead of on the other side of the bar 10, as illustrated.

## Claims

1. An angling support assembly for supporting an angling device which has an externally screw-threaded mounting spigot, the assembly comprising a support member (10 or 20) **characterised in that** the latter is formed with a through-hole (40 or 26), and a connector (28) having a head portion (30) and an internally screw-threaded shank portion (34) extending from the head portion (30), thereby enabling such a device to be secured to the support member (10 or 20) by insertion of such a spigot in the said shank portion (34) with the spigot and/or the shank portion (34) extending through the through-hole (40 or 26) and by rotation of the said head portion (30).

2. An assembly according to claim 1, **characterised in that** the support member (10) is in the form of a bar.

3. An assembly according to claim 2, **characterised in that** the bar (10) is formed with more than one transverse through-hole (40) to support more than one angling device.

4. An assembly according to any preceding claim, **characterised in that** the support member (20) has a portion (22) which can be secured to a bar (10).

5. An assembly according to claim 4, **characterised in that** the assembly further comprises a bar (10) to which the said portion (22) is secured.

6. An assembly according to claim 5, **characterised in that** the bar (10) is tubular or otherwise hollow, and the said portion (22) is a spigot portion which is inserted into the end of the bar (10).

7. An assembly according to claim 1, **characterised in that** it is provided with a number of through-holes (40 or 26) for the connection of a corresponding number of angling devices to the assembly.

8. An assembly according to any preceding claim, **characterised in that** the or each connector (28) is provided with an end cap (44) for its open end to enable it to be held in the support member (10 or 20) with the shank portion (34) extending through the through-hole (40 or 26).

9. An assembly according to any preceding claim, **characterised in that** a spacer (42) is provided for insertion between such an angling device and the support member (10 or 20).

10. An assembly according to any one of claims 1 to 8, **characterised in that** a spacer (42) is provided between the head portion (30) of the connector (28) and the support member (10 or 20).

11. An assembly according to any preceding claim, **characterised in that** the head portion (30) of the connector (28) is provided on its outer surface with a slot (32) to facilitate rotation of the connector (28).

12. An assembly according to claim 11, **characterised in that** the slot (32) is a coin slot that facilitates insertion of a coin for rotation of the connector (28).

## Patentansprüche

1. Angelunterstützungsbaueinheit zum Unterstützen eines Angelgeräts, das einen Anbringungszapfen mit Außenschraubgewinde besitzt, wobei die Baueinheit ein Unterstützungselement (10 oder 20) umfasst, **dadurch gekennzeichnet, dass** das Letztere mit einem Durchgangsloch (40 oder 26) und mit einem Verbinder (28), der einen Kopfabschnitt (30) und einen Schaftabschnitt (34) mit Innenschraubgewinde, der sich von dem Kopfabschnitt (30) erstreckt, versehen ist, so dass ein solches Gerät an dem Unterstützungselement (10 oder 20) dadurch befestigt werden kann, dass ein solcher Zapfen in den Schaftabschnitt (34) eingeschoben wird, wobei sich der Zapfen und/oder der Schaftabschnitt (34) durch das Durchgangsloch (40 oder 36) erstrecken, und dass der Kopfabschnitt (30) gedreht wird.

2. Baueinheit nach Anspruch 1, **dadurch gekennzeichnet, dass** das Unterstützungselement (10) die Form eines Stabs hat.

3. Baueinheit nach Anspruch 2, **dadurch gekennzeichnet, dass** der Stab (10) mit mehr als einem Durchgangsloch (40) ausgebildet ist, um mehr als ein Angelgerät zu unterstützen.

4. Baueinheit nach einem vorhergehenden Anspruch, **dadurch gekennzeichnet, dass** das Unterstützungselement (20) einen Abschnitt (22) besitzt, der an einem Stab (10) befestigt werden kann.

5. Baueinheit nach Anspruch 4, **dadurch gekennzeichnet, dass** die Baueinheit ferner einen Stab (10) umfasst, an dem der Abschnitt (22) befestigt ist.

6. Baueinheit nach Anspruch 5, **dadurch gekennzeichnet, dass** der Stab (10) röhrenförmig oder in anderer Weise hohl ist und dass der Abschnitt (22) ein Zapfenabschnitt ist, der in das Ende des Stabs (10) eingeschoben ist.

7. Baueinheit nach Anspruch 1, **dadurch gekennzeichnet, dass** er mit zahlreichen Durchgangslöchern (40 oder 26) versehen ist, um eine entsprechende Anzahl von Angelgeräten mit der Baueinheit zu verbinden.

8. Baueinheit nach einem vorhergehenden Anspruch, **dadurch gekennzeichnet, dass** der oder jeder Verbinder (28) mit einer Stirnkappe (44) für sein offenes Ende versehen ist, um zu ermöglichen, dass er in dem Unterstützungselement (10 oder 20) gehalten wird, wobei sich der Schaftabschnitt (34) durch das Durchgangsloch (40 oder 26) erstreckt.

9. Baueinheit nach einem vorhergehenden Anspruch, **dadurch gekennzeichnet, dass** ein Abstandshalter (42) dazu vorgesehen ist, zwischen ein solches Angelgerät und das Unterstützungselement (10 oder 20) eingeschoben zu werden.

10. Baueinheit nach einem der Ansprüche 1 bis 8, **dadurch gekennzeichnet, dass** ein Abstandshalter (42) zwischen dem Kopfabschnitt (30) des Verbinders (28) und dem Unterstützungselement (10 oder 20) vorgesehen ist.

11. Baueinheit nach einem vorhergehenden Anspruch, **dadurch gekennzeichnet, dass** der Kopfabschnitt (30) des Verbinders (28) an seiner äußeren Oberfläche einen Schlitz (32) aufweist, um die Drehung des Verbinders (28) zu erleichtern.

12. Baueinheit nach Anspruch 11, **dadurch gekennzeichnet, dass** der Schlitz (32) ein Münzschlitz ist, der die Einführung einer Münze zum Drehen des Verbinders (28) erleichtert.

## Revendications

1. Un ensemble de support de pêche pour supporter un dispositif de pêche comprenant un tourillon de montage muni d'un filetage externe, l'ensemble comprenant un organe support (10 ou 20), **caractérisé en ce que** ce dernier est muni d'un trou traversant (40 ou 26), et un connecteur (28), ayant une partie de tête (30) et une partie de tige (34) à filetage intérieur, s'étendant depuis la partie de tête (30), de manière à permettre qu'un tel dispositif soit fixé sur l'organe support (10 ou 20), par insertion d'un tel tourillon dans ladite partie de tige (34), le tourillon et/ou la partie de tige (34) s'étendant à travers le trou traversant (40 ou 26), et par une rotation de ladite partie de tête (30).

2. Un ensemble selon la revendication 1, **caractérisé en ce que** l'organe support (10) se présente sous la forme d'une barre.

3. Un ensemble selon la revendication 2, **caractérisé en ce que** la barre (10) est munie d'une pluralité de trous traversant (40) servant à supporter une pluralité de dispositifs de pêche.

4. Un ensemble selon l'une quelconque des revendications précédentes, **caractérisé en ce que** l'organe support (20) comprend une partie (22) pouvant être fixée à une barre (10).

5. Un ensemble selon la revendication 4, **caractérisé en ce que** l'ensemble comprend en outre une barre (10), à laquelle ladite partie (22) est fixée.

6. Un ensemble selon la revendication 5, **caractérisé en ce que** la barre (10) est tubulaire, ou autrement creuse, et ladite partie (22) est une partie en forme de tourillon, insérée à l'intérieur de la barre (10).

7. Un ensemble selon la revendication 1, **caractérisé en ce qu'**il est muni d'une pluralité de trous traversants (40 ou 26), pour assurer la liaison d'un nombre correspondant de dispositifs de pêche à l'ensemble.

8. Un ensemble selon l'une quelconque des revendications précédentes, **caractérisé en ce que** le ou chaque connecteur (28) est muni d'un capuchon d'extrémité (44) pour son extrémité ouverte, afin de lui permettre d'être maintenu dans l'organe support (10 ou 20), la partie tige (34) s'étendant à travers le trou traversant (40 ou 26).

9. Un ensemble selon l'une quelconque des revendications précédentes, **caractérisé en ce qu'**un élément d'espacement (42), est prévu pour insertion entre un tel dispositif de pêche et l'organe support (10 ou 20).

10. Un ensemble selon l'une quelconque des revendications 1 à 8, **caractérisé en ce qu'**un élément d'espacement (42) est prévu entre la partie de tête (30) du connecteur (28) et l'organe support (10 ou 20).

11. Un ensemble selon l'une quelconque des revendications précédentes, **caractérisé en ce que** la partie de tête (30) du connecteur (28) est munie, sur sa surface extérieure, d'une fente (32) pour faciliter la rotation du connecteur (28).

12. Un ensemble selon la revendication 11, **caractérisé en ce que** la fente (32) est une fente à pièce de monnaie, facilitant l'insertion d'une pièce de monnaie servant à la rotation du connecteur (28).
